# NEUE EUROPÄISCHE PATENTSCHRIFT

(11) **EP 0 836 627 B2**
(45) Veröffentlichungstag und Bekanntmachung des Hinweises auf die Entscheidung über den Einspruch: **01.06.2005**
(45) Hinweis auf die Patenterteilung: 17.10.2001
(21) Anmeldenummer: 96922761.0
(22) Anmeldetag: 05.07.1996
(51) Int. Cl.: C08G 59/34, C08L 63/08, C08G 59/42

(54) **POLYMERWERKSTOFF, VERFAHREN ZU SEINER HERSTELLUNG UND DESSEN VERWENDUNG**
POLYMER MATERIAL, PROCESS FOR ITS PRODUCTION AND USE THEREOF
MATERIAU POLYMERE, SON PROCEDE DE PRODUCTION ET SON UTILISATION

(30) Priorität: 05.07.1995 DE 19524514
(43) Veröffentlichungstag der Anmeldung: 22.04.1998
(73) Patentinhaber: Bio-Composites And More GmbH, 91459 Markt Erlbach (DE)
(72) Erfinder: SCHÖNFELD, Uwe, D-72401 Haigerloch (DE)
(74) Vertreter: Pfenning, Meinig & Partner
(86) Internationale Anmeldenummer: PCT/DE1996/001243
(87) Internationale Veröffentlichungsnummer: WO 1997/002307

(56) Entgegenhaltungen:
- WO-A-91/01980
- CH-A- 486 755
- DD-A- 48 687
- POLYMER BULLETIN, Bd. 31, Nr. 6, 1993, Seiten 679-685, XP002016727 J. RÖSCHL, E.A.: "Polymers from renewable resources: polyester resins and blends based upon anhydride-cured epoxidized soybean oil " & POLYMER BULLETIN, Bd. 31, Nr. 6, 1993, Seite 768-685
- JOURNAL OF POLYMER SCIENCE, Bd. XVI, 1955, Seiten 201-208, XP002016728 E.C. DEARBORN, E.A.: "Acid acceleration of Epoxide condensations"

## Beschreibung

Die Erfindung betrifft einen Polymerwerkstoff auf der Basis nachwachsender Rohstoffe und ein Verfahren zur Herstellung dieses Werkstoffes und seine Verwendung.

Organische Kunststoffe, welche heute großtechnische Anwendungen finden, werden beinahe ausschließlich auf petrochemischer Basis gewonnen. Beispielsweise werden im Möbelbau und in der Bauindustrie Holzwerkstoffe eingesetzt, die UF-, MUF-, PF- oder seltener PUR-gebunden sind. Abdeckplatten, Endstücke, Kabelkanäle u.s.w. bestehen zumeist aus Polyvinylchlorid (PVC). Im Bereich der Fenster werden heute ebenfalls in großer Zahl Kunststoff-Fenster mit aus PVC gefertigten Rahmen eingesetzt. PVC als Werkstoff für derartige Bauteile weist jedoch entscheidende Nachteile auf. Zum einen ist das Recycling noch nicht zufriedenstellend gelöst, zum anderen entwickelt PVC im Brandfall gefährliche Gase. Verkleidungselemente für Maschinen und Geräte, qualitativ hochwertige Preßformkörper bestehen häufig aus PF-, MF-, EP- oder UP-verstärkten Fasertstoffen oder Matten, die beispielsweise in der KFZ-Industrie eingesetzt werden. Im Zuge der zunehmenden CO2-Diskussion und einer damit verbundenen möglichen globalen klimatischen Veränderung besteht heute ein großer Bedarf nach neuartigen, weitgehend CO2-neutralen Kunststoffen, die die hohen Anforderungsprofile gegenwärtig eingesetzter Kunststoffe auf petrochemischer Basis erfüllen und diese anteilig ersetzen könnten. Sinnvollerweise werden solche Polymerwerkstoffe aus Edukten auf der Basis nachwachsender Rohstoffe gewonnen.

Aus dem Stand der Technik sind bereits Bindemittel bzw. Bindemittel-Kombinationen bekannt geworden, die zum Teil auch nachwachsende Rohstoffe enthalten. Diese Entwicklungen beziehen sich insbesondere auf das Polyurethan-Gebiet. So ist aus der US PS 458 2891 bekannt, Ricinusöl, somit also einen nachwachsenden Rohstoff, mit Polyisocyanat und einem anorganischen Füllstoff umzusetzen.

Aus der EP 01 51 585 ist ein Zweikomponenten-Polyurethan-Klebstoffsystem bekannt, bei dem als oleochemisches Polyol Ringöffnungsprodukte von epoxydierten Fettalkoholen, Fettsäureestern (insbesondere Triglyceride) oder Fettsäureamide mit Alkohol eingesetzt werden. Ferner ist es bekannt, epoxydierte Triglyceride als Weichmacher einzusetzen. Ein derartiges Verfahren ist z.B. in der PCT/EP94/02284 beschrieben.

Aus der US 35 78 633 ist ein Verfahren zur Härtung von Polyepoxyden mit Polycarbonsäurenanhydrid unter Einsatz von speziellen Alkalisalzen ausgewählter Carbonsäuren bekannt. Danach werden ausschließlich Polyepoxyde mit mehr als einer vicinalen Epoxygruppe pro Molekül eingesetzt. Die nach diesem Dokument erhaltenen Polymere haben jedoch den Nachteil, daß sie zum einen von physiologisch bedenklichen Ausgangssubstanzen (z.B. Lithiumsalze) ausgehen und zum anderen, daß die erhaltenen Polymere nicht die erforderlichen Festigkeiten aufweisen. Das ist offensichtlich darauf zurückzuführen, daß nach dem US-Patent eine basische Reaktion abläuft, die die Vernetzung externer Epoxygruppen unterstützt, welche in epoxydierten Triclyceriden jedoch keineswegs vorliegen.

Aus der DE 41 35 664 sind Polymerprodukte bekannt, die aus epoxydierten Triglyceriden und Teilestern von Polycarbonsäuren mit mindestens zwei freien Carbonsäuregruppen und mit Hydrophobierungsmittel hergestellt werden. Nach der DE 41 35 664 werden jedoch elastische Beschichtungsmassen mit erhöhter Wasserbeständigkeit erhalten, die ebenfalls keine befriedigenden Eigenschaften in bezug auf die Festigkeit und die Variationsbreite des Polymersystems aufweisen.

Aus der CH 486 755 ist ein Verfahren zur Erhöhung der Kriechstromfestigkeit von Oberflächen elektrischer Isolierteile aus Kunstharzen, gefüllten Kunstharzen oder Kunstharzlaminaten bekannt. In Polymer Bulletin 31 (1993) 679 werden Polyester hergestellt aus epoxydiertem Sojaöl und verschiedenen Dicarbonsäureanhydriden in Gegenwart spezieller Katalysatoren beschrieben.

Ausgehend hiervon ist es deshalb die Aufgabe der vorliegenden Erfindung, einen neuartigen Werkstoff anzugeben, der auf der Basis von nachwachsenden Rohstoffen aufgebaut ist und der zu Polymerwerkstoffen führt, die in bezug auf ihre Festigkeit ein breites Anwendungsspektrum zulassen.

Die Aufgabe wird hinsichtlich des Polymerwerkstoffes durch die kennzeichnenden Merkmale des Anspruchs 1, in bezug auf das Verfahren durch die kennzeichnenden Merkmale des Anspruchs 12 gelöst. Die Unteransprüche zeigen vorteilhafte Weiterbildungen auf.

Erfindungsgemäß wird somit ein Polymerwerkstoff vorgeschlagen, der im wesentlichen ein Reaktionsprodukt aus drei Komponenten, nämlich aus 10 - 90 Masse-% eines Triglycerides mit mindestens 2 Epoxy- und/oder Aziridingruppen, 5 - 90 Masse-% eines Polycarbonsäureanhydrides, das aus cyclischen Polycarbonsäuren mit mindestens 2 freien Carbonsäuregruppen hergestellt ist, mit 0,01 - 20 Masse-% einer Polycarbonsäure enthält. Die Anmelderin konnte zeigen, daß überraschenderweise Polymerwerkstoffe, die ein Reaktionsprodukt in der vorbeschriebenen Weise enthalten, überraschende Eigenschaften in bezug auf die Festigkeit und die Variationsbreite der Eigenschaften des Werkstoffes aufweisen.

Entscheidend beim anmeldungsgemäßen Werkstoff ist, daß Polycarbonsäureanhydride eingesetzt werden, die als Vernetzer fungieren, so daß die Vernetzungsdichte des erhaltenen Polymers entscheidend erhöht wird. Im Ergebnis davon, erhält man somit harte Polymere.

Die Hauptkomponenten des Reaktionsproduktes sind somit epoxydierte Triglyceride und Polycarbonsäureanhydride, welche miteinander vernetzt werden. Die Vernetzungsreaktion wird dabei durch Zugabe geringer Mengen Polycarbonsäure (0,01 bis 4 Masse-%) gestartet. Die Polycarbonsäure besitzt somit offensichtlich die vorteilhafte Funktion eines Initiators für die interen vorliegenden Epoxygruppen der Triglyceride.

Durch den Einsatz von Polycarbonsäureanhydriden werden demnach die durch die Epoxyringöffnung entstandenen benachbarten OH-Gruppen in Form einer Additionsreaktion vernetzt. Die dabei am Polycarbonsäureanhydrid entstandene freie Carbonsäuregruppe öffnet somit offensichtlich wiederum einen weiteren Epoxyring, wobei ebenfalls eine benachbarte OH-Gruppe erhalten wird, die mit einer zusätzlichen Carbonsäureanhydridgruppe unter weiterer Addition reagiert. Die Reaktion wird dann gestartet, wenn ein Epoxyring geöffnet wurde und die benachbarte OH-Gruppe entstanden ist. Diese Initiierung der Vernetzung erfolgt durch Zugabe geringer Mengen Polycarbonsäure. Wesentlich ist somit, daß eine Öffnung der Epoxygruppe als Reaktionsstart vorliegt. Ein möglicher Reaktionsablauf ist im folgenden schematisch dargestellt.

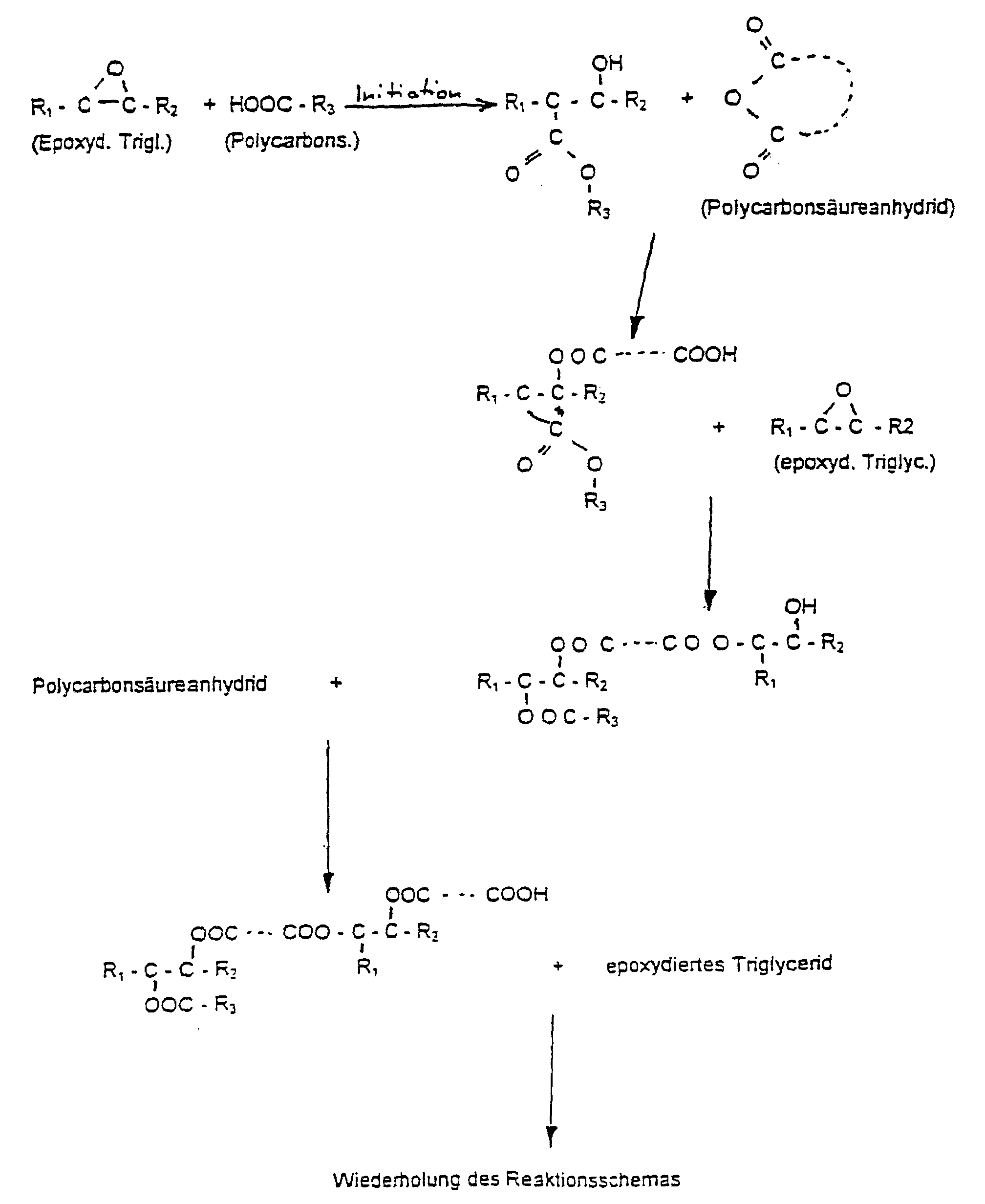

Im Unterschied zum Stand der Technik mit den Vernetzungen mit reinen Polycarbonsäuren reagieren die gebildeten Hydroxygruppen unter Polyaddition mit dem Polycarbonsäureanhydrid. Dies konnte auch durch DSC und IR-Untersuchungen belegt werden.

Wesentlich beim anmeldungsgemäßen Polymerwerkstoff ist somit, daß er ein Reaktionsprodukt enthält, daß aus 10-90 Masse-% eines Triglyceridees und 5-90 Masse-% eines Carbonsäureanhydrids besteht, wobei die Reaktion durch geringe Mengen Polycarbonsäure (0,01-4 Masse-%) initiiert werden. Bevorzugt ist es dabei, wenn das Reaktionsprodukt 35-70 Masse-% eines Triglycerids und 10-60 % des Polycarbonsäureanhydrids enthält.

Beispiele für epoxydierte Triglyceride, die zur Herstellung des erfindungsgemäßen Reaktionsproduktes in dem Polymerwerkstoff eingesetzt werden können, sind Sojaöl, Leinöl, Perillaöl, Tungöl, Oiticicaöl, Safloröl, Mohnöl, Hanföl, Baumwollsamenöl, Sonnenblumenöl, Rapsöl, Triglyceride aus Euphorbia-Gewächsen wie z.B. Euphorbia-lagascae-Öl und higholeic Triglyceride wie z.B. higholeic Sonneblumenöl oder Euphorbia-lathyris-Öl, Erdnußöl, Olivenöl, Olivenkernöl, Mandelöl, Kapoköl, Haselnußöl, Aprikosenkernöl, Bucheckemöl, Lupinenöl, Maisöl, Sesamöl, Traubenkernöl, Lallemantia-Öl, Ricinusöl, Öle von Seetieren wie Heringöl und Sardinenöl oder Menhadenöl, Walöl sowie Triglyceride mit hohem gesättigten Fettsäureanteil, der nachträglich z.B. durch Dehydrierung in einen ungesättigten Zustand überführt wird oder Mischungen davon. Aufgrund der Reaktion mit den Hydroxygruppen ist es möglich, neben epoxydierten Triglyceriden auch hydroxylierte Triglyceride anteilig als weitere Komponente einzusetzen. Derartige hydroxylierte Triglyceride sind z.B. hydroxyliertes Higholeic- oder Ricinusöl. Auf diese Weise können die physikalischen Eigenschaften der Polymere weitgehend abgeändert werden. Wesentlich ist jedoch, daß immer epoxydierte Triglyceride vorhanden sind, da es sonst zum Kettenabbruch kommt. Es ist auch möglich, Triglyceride mit Aziridingruppen einzusetzen. Zur Darstellung von Aziridinen sind unterschiedliche Synthesewege bekannt. Ein Herstellungsweg ist die Cycloaddition z.B. von Carbenen an Azomethinen (Breitmaier E., G. Jung, Org. Chemie Bd. 1, E. Thieme Verlag, Stuttgart) oder von Nitrenen an Olefinen. Eine Synthese durch Reduktion von α-Chlornitrilen oder Oximen mit LiA1H₄ ist ebenfalls möglich (Buil. Chem. Soc. Jpn. 40, 432 (1967) und Tetrahedro 24, 3681 (1968).

Als Polycarbonsäureanhydride, die aus cyclischen Polycarbonsäuren mit mindestens zwei freien Carbonsäuregruppen hergestellt sind, sind Cyclohexandicarbonsäureanhydrid, Cyclohexendicarbonsäureanhydrid, Phthalsäureanhydrid, Trimellithsäureanhydrid, Hemimellithsäureanhydrid, Pyromellithsäureanhydrid, 2,3-Naphthalinsäureanhydrid, 1,2 Cyclopendandicarbonsäureanhydrid, 1,2 Cyclobutandicarbonsäureanhydrid, Chinolinsäureanhydrid, Norbornendicarbonsäureanhydrid (NADICAN) sowie die Methyl-substituierten Verbindungen MNA, Pinsäureanhydrid, Norpinsäureanhydrid, Truxilsäureanhydrid, Perylen 1,2-Dicarbonsäureanhydrid, Caronsäureanhydrid, Narcamphandicarbonsäureanhydrid, Isatosäureanhydrid, Camphersäureanhydrid, 1,8-Naphtalinsäureanhydrid, Diphensäureanhydrid, o-Carboxyphenylessigsäureanhydrid, 1,4,5,8-Naphthalinteracarbonsäureanhydrid oder Mischungen davon bevorzugt.

Einsetzbar sind auch Polycarbonsäureanhydride aus offenkettigen Di- und Polycarbonsäuren mit mindestens zwei freien Carbonsäuregruppen, wie z.B. Aconitsäureanhydrid, Citraconsäureanhydrid, Glutarsäureanhydrid, Itaconsäureanhydrid, Weinsäureanhydrid, Diglycolsäureanhydrid, Ethylendiaminteraessigsäureanhydrid oder Mischungen davon.

Bei den erfindungsgemäß eingesetzten Initiatoren, d.h. bei den Polycarbonsäuren sind die Di- und Tricarbonsäuren bevorzugt. Beispiele hierfür sind Citronensäurederivate, polymerisierte Tallöle, Azelainsäure, Gallussäure, di- oder polymerisierte Harzsäuren, di- oder polymerisierte Anacardsäure, auch Cashew-Nut-Shell-Liquid, Polyuronsäuren, Polyalginsäuren, Mellithsäure, Trimesinsäure, aromatische Di- und Polycarbonsäuren wie z.B. Phthalsäure, Trimellithsäure, Hemimellithsäure, Pyromellithsäure sowie ihre aromatisch substituierten Derivate wie z.B. Hydroxy- oder Alkyl-Phthalsäure, ungesättigte cyclische Di- und Polycarbonsäuren wie z.B. Norpinsäure, heterocyclische Di- und Polycarbonsäuren wie z.B. Loiponsäure oder Cincholoiponsäure, bicyclische Di- und Polycarbonsäuren wie z.B. Norbornandicarbonsäuren, offenkettige Di- und Polycarbonsäuren, wie z.B. Malonsäure und ihre längerkettigen Homologen sowie ihre substituierten Verbindungen wie z.B. Hydroxy- und Keto-Di- und Polycarbonsäuren, Pektinsäuren, Huminsäuren, polymeres Cashew-Nut-Shell-Liquid mit mindestens zwei freien Carbonsäuregruppen im Molekül oder Mischungen davon.

Eine weitere bevorzugte Ausführungsform der Erfindung schlägt vor, daß der Polymerwerkstoff ein Reaktionsprodukt enthält, das aus den vorstehend beschriebenen Ausgangskomponenten hergestellt wurde, jedoch zusätzlich mit einem Katalysator. Der Katalysator kann dabei in einem Mengenverhältnis von 0,01 - 10 Masse-%, bevorzugt von 0,05 bis 5 Masse-% zugesetzt werden. Als Katalysatoren können grundsätzlich alle Verbindungen dienen, die zur Beschleunigung von Vernetzungen von Epoxydharzen dienen, eingesetzt werden. Beispiele hierfür sind tertiäre Amine, wie N,N'Benzyldimenthylanilin, Imidazol und seine Derivate, Alkohole, Phenole und ihre substituierten Verbindungen, Hydroxycarbonsäuren wie Milchsäure oder Solicylsäure, Organometall-Verbindungen wie Triethanolamintitanat, Di-n-Butylzinnlaurat, Lewis-Säuren, besonders Bortrifluorid, Aluminiumtrichlorid und ihre aminischen Komplexverbindungen, Lewis-Basen, besonders Alkoholate, multifunktionelle Mercaptoverbindungen und Thiosäuren sowie Organophosphor-Verbindungen, besonders Triphenylphosphit, Trisnonylphenylphosphit und Bis-β-Chlorethylphosphit, bicyclische Amine wie [2.2.2] Diazabicyclooctan, Chinuclidin oder Diazabicycloundecen, Alkali- und Erdalkalihydroxyde, Grinard-Verbindungen oder Mischungen davon.

Besonders hervorzuheben ist, daß der erfindungsgemäße Polymerwerkstoff ausschließlich aus dem Reaktionsprodukt, wie vorstehend beschrieben, bestehen kann oder auch je nach Anforderungsprofil noch zusätzlich einen Füllstoff oder ein Flammschutzmittel enthalten kann. Wenn der Polymerwerkstoff ausschließlich ein Reaktionsprodukt und Füllstoff enthält, ist es dabei bevorzugt, daß er 2-98 Masse-% des Reaktionsproduktes und 98-2 Masse-% des Füllstoffes enthält. Besonders bevorzugt ist es, wenn der Polymerwerkstoff 6-90 Masse-% des Reaktionsproduktes und 10-94 Masse-% des Füllstoffes enthält.

Besonders bevorzugte Beispiele für Füllstoffe sind organische Füllstoffe auf der Grundlage cellulosehaltiger Materialien wie Holzmehl, Sägespäne oder Holzabfall, Reisspelzen, Stroh- und Flachsfasern auf der Grundlage von Proteinen, besonders Schafswolle sowie anorganische Füllstoffe auf der Basis von Silikaten und Carbonaten wie Sand, Quarz, Korrund, Siliciumcarbid und Glasfasern, oder Mischungen davon. Der erfindungsgemäße Polymerwerkstoff kann auch bis zu 50 Masse-% eines Flammschutzmittels enthalten. Bevorzugte Flammschutzmittel sind: Aluminiumhydroxyd, Halogen-, Antimon-, Wismuth-, Bor- oder Phosphorverbindungen, Silikat-Verbindungen oder Mischungen davon.

Bei der Herstellung des Werkstoffes nach der bevorzugten Ausführungsform mit dem Füllstoff kann dabei so vorgegangen werden, daß zum einen zuerst eine Mischung der Ausgangs-Komponenten, d.h. des Triglycerids des Polycarbonsäureanhydrids und der Carbonsäure hergestellt wird, und daß dann anschließend diese Mischung bis zu einer Viskosität von 0,2 - 20.000 mPa.s (CPS) bei 20°C - 200°C vorpolymerisiert wird und dann der Füllstoff zugegeben wird. Im Anschluß daran kann ggf. auch nach einer Formgebung die Aushärtung - ggf. unter Druck - erfolgen. Es ist aber auch möglich, alle Zusatzstoffe zu mischen und dann die Vorpolymerisierung durchzuführen.

Andererseits kann auch so vorgegangen werden, daß alle Einsatzstoffe, d.h. die Triglyceride, die Polycarbonsäureanhydride und die Carbonsäuren sowie ggf. die weiteren Zuschlagstoffe wie Füllstoffe und/oder Flammschutzmittel vermischt werden, und daß dann nachfolgend die Aushärtung bei erhöhter Temperatur und erhöhter Temperatur und erhöhtem Druck erfolgt.

Die Aushärtung kann in Bereichen von > 20°C bis 200°C Grad bei einem Druck von 10⁵ Pa (1 bar) bis 10⁷ Pa (100 bar) erfolgen. Die Zeitdauer der Aushärtung ist abhängig von der Temperatur, dem Druck und ggf. dem zugesetzten Katalysator. Die Aushärtezeit kann im Bereich von 10 Sekunden bis zu 24 Stunden liegen. Bevorzugt wird im Temperaturbereich von 50 - 150°C gearbeitet.

Der erfindungsgemäße Polymerwerkstoff kann auch in Vliese oder Matten infiltriert werden. Dadurch können faserverstärkte Formteile hergestellt werden.

Mit dem erfindungsgemäßen Verfahren kann die erhaltene Mischung einzeln in Formen gegeben und gepreßt, oder es kann eine Endlosproduktion durchgeführt werden. Die Endlosproduktion kann auch durch Extrudieren oder Heißwalzen erfolgen.

Das Reaktionsgemisch bildet nach der Aushärtung eine geschlossene und ausgesprochen glatte Oberfläche aus, dabei ist die plastische Auflösung, d.h. die Größe geometrischer Figuren, die noch plastifiziert werden kann, sehr hoch. Feinste filigrane Muster werden durch das Material sehr exakt wiedergegeben.

Der erfindungsgemäße Werkstoff zeichnet sich besonders dadurch aus, daß er toxikologisch unbedenklich ist und damit nicht die Nachteile von PVC und/oder anderer vergleichbarer Werkstoffe wie z.B. derer auf PolyurethanBasis besitzt. Zu erwähnen ist, daß der neuartige Werkstoff ähnliche mechanische Eigenschaften wie PVC, EP oder PES besitzen kann. Diese Werkstoffvarianten sind starrelastisch und von hoher Festigkeit. Erfindungsgemäße hochgefüllte cellulosehaltige Polymerwerkstoffe, die durch Pressen oder Extrusion erhalten wurden, besitzen hohe mechanische Festigkeiten. Bei mechanischer Punktbelastung, wie sie z.B. bei der Befestigung von Holzschrauben oder der Einbringung von Holznägeln auftritt, bleibt die Struktur des umgebenden Materials erhalten. Ein Einreißen, wie es beispielsweise bei Holz auftreten kann, wird nicht beobachtet. Der Werkstoff läßt sich problemlos mechanisch bearbeiten. Beim Sägen oder Fräsen ist kein Einreißen der Grenzflächen oder gar Abplatzen von kleineren Teilstücken zu beobachten.

Durch zusätzliche Anteile hydroxylierter Triglyceride können Formkörper erhalten werden, die bei Raumtemperatur ein teilplastisches Verhalten und gleichzeitig eine ausgezeichnete Reißfestigkeit besitzen. Je nach Vernetzungsgrad, der prinzipiell durch die Zusammensetzung der Ausgangskomponenten beeinflußbar ist, können Formkörper erhalten werden, die eine Warmumformung der Polymerwerkstoffkörper erlauben. Insbesondere wird durch den Einbau von Aluminiumhydroxyd bei Entflammungsversuchen eine merkliche Verbesserung des Brandverhaltens festgestellt. Der Einbau von Aluminiumhydroxyd und die damit einhergehende Abspaltung von Wasser verhindert den direkten Angriff der Flammen. Die Brandschutzklasse BS nach DIN 4102 ist somit erfüllt.

In zahlreichen Versuchen hat sich zudem gezeigt, daß beim erfindungsgemäßen Werkstoff keine merkliche Wasseraufnahme erfolgt, cellulosehaltig hochgefüllte Presslinge wurden dazu über einen längeren Zeitraum hinweg in Wasser getaucht. Nach 80 Stunden wurde keine nennenswerte Wassermenge vom Werkstoff aufgenommen. Am Werkstoff konnten keine physikalischen und chemischen Änderungen beobachtet werden.

Die Erfindung wird durch nachfolgende Beispiele näher erläutert:

### Beispiel 1

53,5 Masse-% epoxidiertes Leinöl mit einem Sauerstoffgehalt von 9 Masse-% werden mit 42,8 Masse-% Camphersäureanhydrid und 2,7 Masse-% eines Gemisches aus di- und trimerer Abietinsäure gemischt. Diese Mischung wird mit 1 Masse-% einer 50 %-igen ethanolischen Chinuclidinlösung homogenisiert. 10 Masse-% dieses Gemisches werden mit 90 Masse-% Stroh gemischt und bei einem Druck von 15 bar und einer Temperatur von 180°C 10 Minuten lang gepreßt. Die erhaltene Faserplatte besitzt eine physikalische Dichte 0,62 [g/cm³], zeichnet sich durch hochwertige mechanische Eigenschaften aus und besitzt eine ausgezeichnete Wasserbeständigkeit. Sie kann als Faserplattenmaterial in der Bau- und Möbelindustrie eingesetzt werden.

### Beispiel 2

80 Masse-Teile epoxidiertes Perillaöl mit einem Sauerstoffgehalt von 8 Masse-% werden mit 16 Masse-Teilen Pyromellithsäuredianhydrid und 4 Masse-% einer trimerisierten Fettsäure gemischt. 30 Masse-% dieser Mischung werden auf 70 Masse-% eines Jute-Hanf-Faservlieses so aufgetragen, daß das Faservlies homogen benetzt ist. Die infiltrierte Fasermatte wird anschließend bei einem Druck von 10 bar und einer Temperatur von 170°C 10 Minuten lang gepreßt. Das erhaltene Faserprodukt besitzt eine hohe Elastizität, Bruchfestigkeit und Wasserfestigkeit. Es kann in vielen Bereichen Anwendung finden, in denen kunststoffverstärkte Fasern oderfaserverstärkte Kunststoffe eingesetzt werden, wie beispielsweise faserverstärkte Schalungs- und Formteile oder Verkleidungselemente.

### Beispiel 3

42,9 Masse-% epoxydiertes Sojaöl mit einem Sauerstoffgehalt von 6,5 Masse-% werden mit 21,5 Masse-% eines hydroxylierten Higholeic-Öls gemischt. Dieser Mischung werden 34,3 Masse-% Norbornendicarbonsäureanhydrid und 1,3 Masse-% einer 5β %-igen methanolischen DABCO-Lösung beigefügt. Das Gemisch wird homogenisiert und anschließend bei einer Temperatur von 140°C innerhalb von 15 Minuten vernetzt. Das erhaltene Produkt isttransparent, plastisch verformbar und besitzt eine hohe Reißfestigkeit. Dieses Produkt kann sich zur Beschichtung von Werkstoffen und Bauteilen eignen, die plastisch verformbar sein müssen, wie z.B. elektrische Kabel.

### Beispiel 4

72,7 Masse-% epoxydiertes Hanföl mit einem Sauerstoffgehalt von 10,5 Masse-% werden mit 27,3 Masse-% Trimellithsäureanhydrid gemischt. 8 Masse-% dieser Mischung werden mit 92 Masse-% getrockneten Dinkelspelzen gemischt und bei einem Druck von 15 bar und einer Temperatur von 170°C 8 Minuten lang gepreßt. Die erhaltene Faserplatte besitzt eine physikalische Dichte von 0,88 [g/cm³], zeichnet sich durch hohe Wasserbeständigkeit und ausgezeichnete mechanische Festigkeit aus und kann als Faserplatte in der Bau- und Möbelindustrie eingesetztwerden.

### Beispiel 5

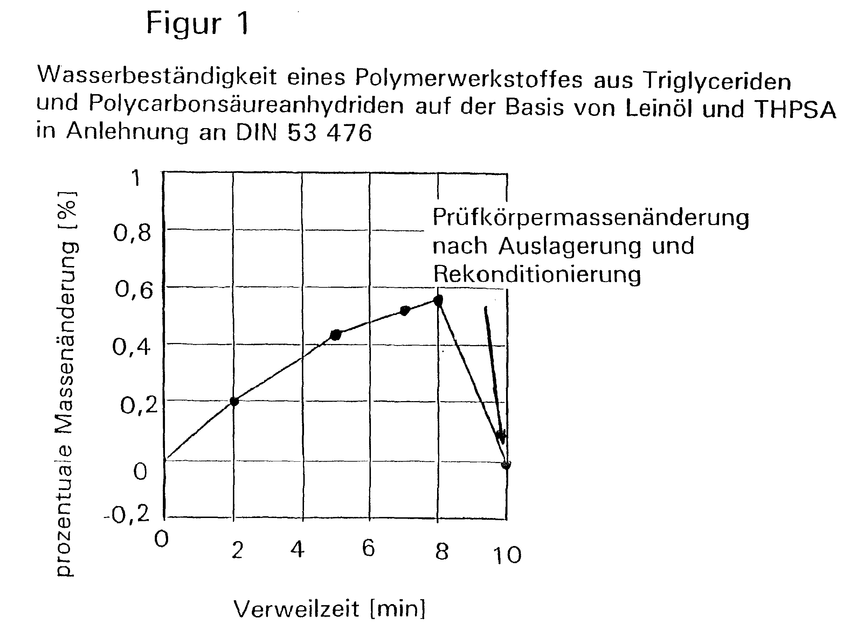

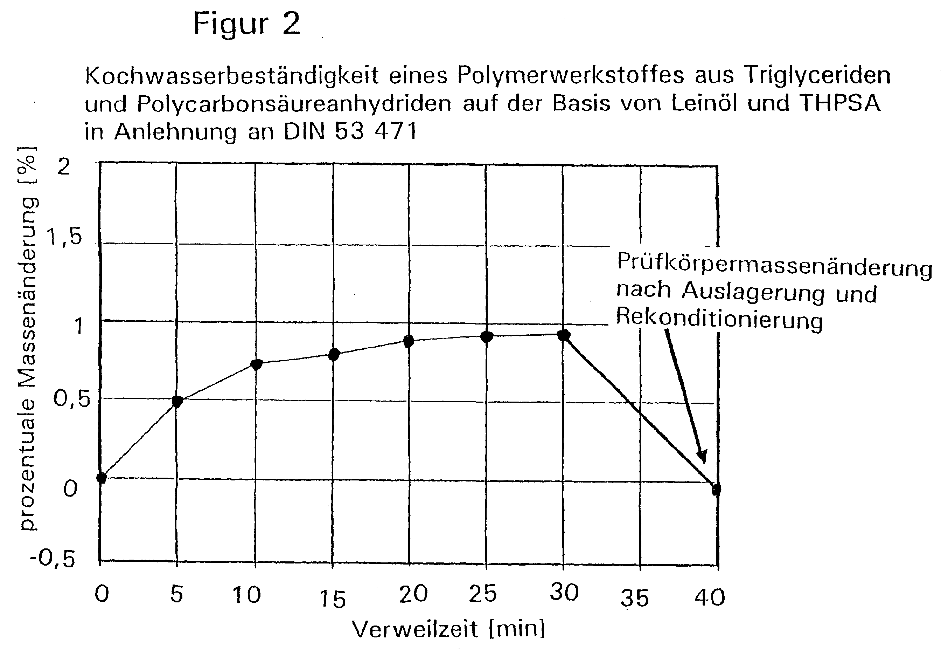

54,7 Masse-% epoxydiertes Leinöl mit einem Sauerstoffgehalt von 9,6 Masse-% werden mit 43,7 Masse-% Tetrahydrophthalsäureanhydrid und 1,1 Masse-% Adipinsäure gemischt. Diese Mischung wird mit 0,5 Masse-% DBN homogenisiert und bei 145°C innerhalb von 5 Minuten zu einem harten, transparenten Formkörper vernetzt. Der erhaltene Werkstoff ist Wasser- und kochwasserbeständig (vergl. Bild 1 und 2) und besitzt hohe mechanische Festigkeiten. Das Material kann bis zu 300°C ohne Zersetzung erwärmt werden. Es kann sich z.B. als Verkleidungselement für Geräte und Maschinen verschiedenster Art eignen.

### Beispiel 6

60 Masse-% epoxydiertes Sojaöl mit einem Sauerstoffgehalt von 6,5 Masse-% werden mit 36 Masse-% 1,2 Cyclohexandicarbonsäureanhydrid und 1,1 Masse-% dimerisiertem Kolophonium mit einer Säurezahl von 154 gemischt. Die Mischung wird mit einer 50 %-igen butanolischen Imidazollösung homogenisiert und bei 140°C innerhalb von 10 Minuten vernetzt. Der erhaltene Polymerwerkstoff ist transparent, zeichnet sich durch hohe Wasserfestigkeit aus und kann bei einer Temperatur von ca. 90°C warm umgeform werden. Unterhalb dieser Temperatur besitzt er hohe mechanische Festigkeiten.

### Beispiel 7

69,9 Masse-% eines aziridingruppenhaltigen Higholeic-Öls aus Euphorbia Lathyris mit einem Stickstoffgehalt von 4,3 Masse-% werden mit 28 Masse-% Phthalsäureanhydrid, 1,5 Masse-% Sebacinsäure und 0,6 Masse-% einer isopropanolischen Chinuclidinlösung gemischt. Die Mischung wird bei 145°C in einem Zeitraum von 5 Minuten zu einem hartelastischen, transparenten Polymerwerkstoff vernetzt, der eine hohe Wasserbeständigkeit und Abriebfestigkeit besitzt.

### Beispiel 8

51,5 Masse-% eines epoxydierten Tungöls mit einem Sauerstoffgehalt von 10,5 Masse-% werden mit 45,5 Masse-% Camphersäureanhydrid und 2,5 Masse-% einer 70 %-igen ethanolischen Citronensäurelösung gemischt. Dieser Mischung werden 0,5 Masse-% DABCO hinzugegeben und das Gemisch homogenisiert. 30 Masse-% dieser Mischung werden auf 70 Masse-% eines trockenen Kokosfaservlieses aufgetragen, so daß die Fasern homogen mit der reaktiven Mischung infiltriert sind. Die infiltrierte Kokosfaser wird anschließend bei 130°C 20 Minuten lang vorgewärmt. Das reaktive Gemisch reagiert hierbei zu einem Präpolymer mit einer Viscosität von ca. 10.000 [mPas]. Anschließend wird das vorbehandelte Vlies in eine Form gebracht und bei einer Temperatur von 160°C 1 Minute lang bei 15 bar gepreßt. Das erhaltene Faserprodukt besitzt eine hohe mechanische Festigkeit, ist sehr wasserbeständig und temperaturbeständigkeit. Es kann in Bereichen Anwendung finden, in denen kunststoffverstärkte Faservliesstoffe oder faserverstärkte Kunststoffe eingesetzt werden.

### Beispiel 9

Eine Mischung aus 61,6 Masse-% epoxydierten Leinöls mit einem Sauerstoffgehalt von 9,6 Masse-% und 15,4 Masse-% epoxydierten Sardinenöls mit einem Sauerstoffgehalt von 10,5 Masse-% werden mit 19,2 Masse-Teilen Pyromellithsäuredianhydrid und 3,8 Masse-% trimerisierter Fettsäure gemischt. 25 Masse-% dieses Gemisches werden mit 75 Masse-% Holzmehl mit einer durchschnittlichen Faserlänge von 300 µm homogenisiert. Das benetzte Pulver wird anschließend mit Hilfe eines RAM-Extruders bei 160°C und einem Druck von 40 bar zu Endlosformteilen verarbeitet. Die enthaltenen Produkte besitzen eine hohe mechanische Stabilität und zeichnen sich durch eine hervorragende Wasserbeständigkeit aus.

### Beispiel 10

53,2 Masse-% eines epoxydierten Safloröls mit einem Sauerstoffgehalt von 9 Masse-% werden mit 10 Masse-% Aconitsäureanhydrid, 32,5 Masse-% Methylnorbornendicarbonsäureanhydrid und 2,6 Masse-% dimerisierter Anacardsäure gemischt. Dieser Mischung werden 1,7 Masse-% einer propanolischen DABCO-Lösung hinzugefügt und das Gemisch anschließend homogenisiert. 10 Masse% dieser Mischung werden mit 90 Masse-% getrockneten und gemahlenen Reisspelzen mit einer mitleren Korngröße von 0,5 mm gemischt, bis ein homogen benetztes Pulver vorliegt. Diese Mischung wird anschließend bei einer Temperatur von 130°C 15 Minuten lang bei einem Druck von 15 bar gepreßt. Der erhaltene Werkstoff besitzt eine physikalische Dichte von 0,9 [g/cm³] und kann spanabhebend bearbeitet werden.

Dieser Werkstoff eignet sich überall dort, wo mitteldichte Faserplatten (MDF( im Einsatz sind.

### Beispiel 11

50,5 Masse-% epoxydiertes Leinöl werden mit 42,5 Masse-% Tetrahydrophthalsäureanhydrid und 2,5 Masse-% trimerisierter Abietinsäure gemischt. Diese Mishung wird mit 1,8 Masse-% einer 50 %-igen isobutanolischen Chinuclidin-Lösung homogenisiert. 30 Masse-% dieser Mischung werden mit 35 Masse-% Schwerspat, 5 Masse-% eines Pigmentes wie z.B. Rutil und 30 Masse-% eines Gemenges aus Muskuvit-, Chlorit- und Quarzmehls homogenisiert. Das Gemisch wird anschließend in einer Form bei einem Druck von 30 bar und einer Temperatur von 140°C innerhalb von 8 Minuten zu hartelastischen duroplastischen Formkörpern vernetzt, die eine hohe Beständigkeit gegenüber Wasser und Kochwasser sowie hohe mechanische Festigkeiten besitzen. Der Werkstoff kann z.B. als Verkleidungselement für Geräte und Maschinen verschiedenster Art eingesetzt werden.

## Patentansprüche

1. Polymerwerkstoff auf der Basis nachwachsender Rohstoffe, enthaltend ein Reaktionsprodukt, das durch Vernetzung von 10-90 Masse-% eines Triclycerides mit mindestens 2 Epoxy- und/oder Aziridingruppen und 5-90 Masse-% eines Polycarbonsäureanhydrides, das aus cyclischen Polycarbonsäuren mit mindestens 2 freien Carbonsäuregruppen hergestellt ist, mit 0,01-4 Masse-% einer Polycarbonsäure als Initiator erhalten worden ist.

2. Polymerwerkstoff nach Anspruch 1,
**dadurch gekennzeichnet, daß** die epoxidierten Triclyceride aus Sojaöl, Leinöl, Perillaöl, Tungöl, Oiticicaöl, Safloröl, Mohnöl, Hanföl, Baumwollsamenöl, Sonnenblumenöl, Rapsöl, Triglyceride aus Euphorbia-Gewächsen wie z.B. Euphorbia-lagascae-Öl und higholeic Triglyceride wie z.B. higholeic Sonneblumenöl oder Euphorbia-lathyris-Öl, Erdnußöl, Olivenöl, Olivenkernöl, Mandelöl, Kapoköl, Haselnußöl, Aprikosenkernöl, Bucheckernöl, Lupinenöl, Maisöl, Sesamöl, Traubenkernöl, Lallemantia-Öl, Ricinusöl, Öle von Seetieren wie Heringöl und Sardinenöl oder Menhadenöl, Walöl sowie Triglyceride mit hohem gesättigten Fettsäureanteil, der nachträglich z.B. durch Dehydrierung in einen ungesättigten Zustand überführt wird, oder Mischungen davon ausgewählt sind.

3. Polymerwerkstoff nach Anspruch 1 oder 2,
**dadurch gekennzeichnet, daß** die epoxydierten Triglyceride zusätzlich hydroxylierte Triglyceride wie Ricinusöl enthalten.

4. Polymerwerkstoff nach mindestens einem der Ansprüche 1 bis 3,
**dadurch gekennzeichnet, daß** die Polycarbonsäureanhydride ausgewählt sind aus Cyclohexandicarbonsäureanhydrid, Cyclohexendicarbonsäureanhydrid, Phthalsäureanhydrid, Trimellithsäureanhydrid, Hemimellithsäureanhydrid, Pyromellithsäureanhydrid, 2,3-Naphthalinsäureanhydrid, 1,2 Cyclopendandicarbonsäureanhydrid, 1,2 Cyclobutandicarbonsäureanhydrid, Chinolinsäureanhydrid, Norbornendicarbonsäureanhydrid (NADICAN) sowie die Methyl-substituierten Verbindungen MNA, Pinsäureanhydrid, Norpinsäureanhydrid, Truxilsäureanhydrid, Perylen 1,2-Dicarbonsäureanhydrid, Caronsäureanhydrid, Narcamphandicarbonsäureanhydrid, Isatosäureanhydrid, Camphersäureanhydrid, 1,8-Naphtalinsäureanhydrid, Diphensäureanhydrid, o-Carboxyphenylessigsäureanhydrid, 1,4,5,8-Naphthalinteracarbonsäureanhydrid, oder Mischungen davon.

5. Polymerwerkstoff nach mindestens einem der Ansprüche 1 bis 4,
**dadurch gekennzeichnet, daß** als Polycarbonsäure eine Di- oder Tricarbonsäure eingesetzt wird.

6. Polymerwerkstoff nach Anspruch 5,
**dadurch gekennzeichnet, daß** die Polycarbonsäure ausgewählt ist aus Citronensäurederivate, polymerisierte Tallöle, Azelainsäure, Gallussäure, di- oder polymerisierte Harzsäuren, di- oder polymerisierte Anacardsäure, auch Cashew-Nut-Shell-Liquid, Polyuronsäuren, Polyalginsäuren, Mellithsäure, Trimesinsäure, aromatische Di- und Polycarbonsäuren wie z.B. Phthalsäure, Trimellithsäure, Hemimellithsäure, Pyromellithsäure sowie ihre aromatisch substituierten Derivate wie z.B. Hydroxy- oder Alkyl-Phthalsäure, ungesättigte cyclische Di- und Polycarbonsäuren wie z.B. Norpinsäure, heterocyclische Di- und Polycarbönsäuren wie z.B. Loiponsäure oder Cincholoiponsäure, bicyclische Di- und Polycarbonsäuren wie z.B. Norbornandicarbonsäuren, offenkettige Di- und Polycarbonsäuren, wie z.B. Malonsäure und ihre längerkettigen Homologen sowie ihre substituierten Verbindungen wie z.B. Hydroxy- und Keto-, Di- und Polycarbonsäuren, Pektinsäuren, Huminsäuren, polymeres Cashew-Nut-Shell-Liquid mit mindestens zwei freien Carbonsäuregruppen im Molekül, oder Mischungen davon eingesetzt werden.

7. Polymerwerkstoff nach mindestens einem der Ansprüche 1 bis 6,
**dadurch gekennzeichnet, daß** er 2-98 Masse-% eines Reaktionsproduktes nach Anspruch 1 und 98-2 Masse-% eines Füllstoffes enthält.

8. Polymewerkstoff nach mindestens einem der Ansprüche 1 bis 7,
**dadurch gekennzeichnet, daß** der Füllstoff ausgewählt ist aus der Gruppe der organischen Füllstoffe auf der Grundlage cellulosehaltiger Materialien wie Holzmehl, Sägespäne oder Holzabfall, reisspelzen, Stroh- und Flachsfasern auf der Grundlage von Proteinen, besonders Schafswolle sowie anorganische Füllstoffe auf der Basis von Silikaten und Carbonaten wie Sand, Quarz, Korrund, Siliciumcarbid und Glasfasern, oder Mischungen davon.

9. Polymerwerkstoff nach mindestens einem der Ansprüche 1 bis 8,
**dadurch gekennzeichnet, daß** bei der Herstellung des Reaktionsproduktes 0,01 - 10 Masse-% eines Katalysators zugesetzt sind.

10. Polymerwerkstoff nach Anspruch 9,
**dadurch gekennzeichnet, daß** der Katalysator ausgewählt ist aus tertiären Aminen, wie N,N'Benzyldimenthylanilin, Imidazol uns seine Derivate, Alkohole, Hydroxycarbonsäuren wie Milchsäure oder Salicylsäure, Thiosäuren sowie Organophosphor-Verbindungen, besonders Triphenylphosphit, Trisnonylphenylphosphit und Bis-β-Chlorethylphosphit, bicyclische Amine wie [2.2.2] Diazabicyclooctan, Chinuclidin oder Diazabicycloundecen, oder Mischungen davon.

11. Polymerwerkstoff nach mindestens einem der Ansprüche 1 bis 10,
**dadurch gekennzeichnet, daß** er zusätzlich ein Flammschutzmittel, ausgewählt aus der Gruppe Aluminiumhydroxyd, Halogen-, Antimon-, Wismuth-, Bor- oder Phosphorverbindungen, Silikat-Verbindungen oder Mischungen davon enthält.

12. Verfahren zur Herstellung des Poymerwerkstoffes nach mindestens einem der Ansprüche 1 bis 11,
**dadurch gekennzeichnet, daß** das Triglycerid, das Polycarbonsäureanhydrid die Polycarbonsäure und ggf. die weiteren Zusatzstoffe wie Füllstoffe und/oder Katalysator und/oder Flammschutzmittel vermischt werden und daß dann anschließend die Aushärtung erfolgt.

13. Verfahren zur Herstellung des Polymerwerkstoffes nach mindestens einem der Ansprüche 1 bis 12,
**dadurch gekennzeichnet, daß** das Triglycerid, das Polycarbonsäureanhydrid und die Polycarbonsäure und ggf. der Katalysator bis zu einer Viskosität von 0,2 - 20.000 mPa.s (CPS) bei 20°C - 200°C vorvernetzt werden und daß dann der Füllstoff und/oder das Flammschutzmittel zugegeben werden und daß dann die Aushärtung erfolgt.

14. Verfahren nach Anspruch 12 und 13,
**dadurch gekennzeichnet, daß** die Aushärtung bei einer Temperatur im Bereich von > 20°C bis 200°C und bei einem Druck von 10⁵ Pa (1 bar) bis 10⁷ Pa (100 bar) während einer Zeit im Bereich von 10 Sekunden bis 24 Stunden durchgeführt wird.

15. Verwendung des Polymerwerkstoffes nach mindestens einem der Ansprüche 1 bis 11,
in vorgefertigten Raumgliederungssystemen, als Materialsubstitut für Kunststoff- und Metallrahmen, als Lackschienen- und Verkleidungselement-Material, als Profilmaterial, als Dichtungsmaterial, hochabriebfeste Beschichtungen und Formkörper, als rißüberbrückende Schutzhaut, rutschfeste Überzüge, elektrisch-isolierende oder - leitende Massen, tribologisch einsetzbare Filme, Unterwasser-Schiffsanstriche, Wirbelsintersysteme für beanspruchte Geräte- und Formeteile, Formelemente als infiltrierte Fasern und Fasermatten, Spanplatten, MDF- und Hartfaserplatten-Substitute in der Bau- und Möbelindustrie, Endlosprofile

## Claims

1. Polymeric material based on renewable raw materials, comprising a reaction product obtained by crosslinking from 10 to 90% by weight of a triclyceride having at least 2 epoxy and/or aziridine groups and from 5 to 90% by weight of a polycarboxylic anhydride prepared from cyclic polycarboxylic acids having at least 2 free carboxylic acid groups, with from 0.01 to 4% by weight of a polycarboxylic acid as initiator.

2. Polymeric material according to Claim 1,
**characterized in that** the epoxidized triclycerides have been selected from soya oil, linseed oil, perilla oil, tung oil, oiticica oil, safflower oil, poppyseed oil, hempseed oil, cottonseed oil, sunflower oil, rapeseed oil, triglycerides made from Euphorbias, e.g. Euphorbia iagascae oil, and high-oleic triglycerides, e.g. high-oleic sunflower oil or Euphorbia iathyris oil, groundnut oil, olive oil, olive kernel oil, almond oil, kapok oil, hazelnut oil, apricot kernel oil, beechnut oil, lupin oil, maize oil, sesame oil, grape kernel oil, lallemantia oil, castor oil, oils from marine animals, for example herring oil and sardine oil, or menhaden oil, whale oil, and also triclycerides with high saturated fatty acid content which is then converted into unsaturation, for example by dehydrogenation, and mixtures of these.

3. Polymeric material according to Claim 1 or 2,
**characterized in that** the epoxidized triglycerides also comprise hydroxylated triglycerides, such as castor oil.

4. Polymeric material according to at least one of Claims 1 to 3,
**characterized in that** the polycarboxylic anhydrides have been selected from cyclohexanedicarboxylic anhydride, cyclohexenedicarboxylic anhydride, phthalic anhydride, trimellitic anhydride, hemimellitic anhydride, pyromellitic anhydride, 2,3-naphthalenic anhydride, 1,2 cyclopentanedicarboxylic anhydride, 1,2 cyclobutanedicarboxylic anhydride, quinolinic anhydride, norbornenedicarboxylic anhydride (NADICAN), and also the methyl-substituted compounds MNA, pinic anhydride, norpinic anhydride, truxilic anhydride, perylene 1,2-dicarboxylic anhydride, caronic anhydride, norcamphanedicarboxylic anhydride, isatoic anhydride, camphoric anhydride, 1,8-naphthalenic anhydride, diphenic anhydride, o-carboxyphenylacetic anhydride, 1,4,5,8-naphthalenetetracarboxylic anhydride and mixtures of these.

5. Polymeric material according to at least one of Claims 1 to 4,
**characterized in that** a di- or tricarboxylic acid is used as polycarboxylic acid.

6. Polymeric material according to Claim 5,
**characterized in that** the polycarboxylic acid has been selected from citric acid derivatives, polymerized tall oils, azelaic acid, gallic acid, di- or polymerized resin acids, di- or polymerized anacardic acid, and cashew nutshell liquid, polyuronic acids, polyalginic acids, mellitic acid, trimesic acid, aromatic di- and polycarboxylic acids, e.g. phthalic acid, trimellitic acid, hemimellitic acid, pyromellitic acid, and also their aromatically substituted derivatives, e.g. hydroxy- or alkylphthalic acid, unsaturated cyclic di- and polycarboxylic acids, e.g. norpinic acid, heterocyclic di- and polycarboxylic acids, e.g. loiponic acid or cincholoiponic acid, bicyclic di- and polycarboxylic acids, e.g. norbornanedicarboxylic acids, open-chain di- and polycarboxylic acids, e.g. malonic acid and longer-chain homologues thereof, and also substituted derivatives thereof, e.g. hydroxy- and keto-, di- and polycarboxylic acids, pectinic acids, humic acids, polymeric cashew nutshell liquid having at least two free carboxylic acid groups in the molecule, and mixtures of these are used.

7. Polymeric material according to at least one of Claims 1 to 6,
**characterized in that** it comprises from 2 to 98% by weight of a reaction product according to Claim 1 and from 98 to 2% by weight of a filler.

8. Polymeric material according to at least one of Claims 1 to 7,
**characterized in that** the filler has been selected from the group consisting of organic fillers based on cellulose-containing materials, such as woodflour, sawdust, or wood waste, rice husks, protein-based fibres derived from straw or from flax, and particularly sheep's wool, and also inorganic fillers based on silicates or on carbonates, such as sand, quartz, corundum, silicon carbide and glass fibres, and mixtures of these.

9. Polymeric material according to at least one of Claims 1 to 8,
**characterized in that** from 0.01 to 10% by weight of a catalyst have been added during the preparation of the reaction product.

10. Polymeric material according to Claim 9,
**characterized in that** the catalyst has been selected from tertiary amines, such as N,N'benzyldimenthylaniline, imidazole and its derivatives, alcohols, hydroxycarboxylic acids, such as lactic acid or salicylic acid, thio acids, and also organophosphorus compounds, particularly triphenyl phosphite, trisnonylphenyl phosphite and bis-β-chloroethyl phosphite, bicyclic amines, such as [2.2.2]diazabicyclooctane, quinuclidine and diazabicycloundecene, and mixtures of these.

11. Polymeric material according to at least one of Claims 1 to 10,
**characterized in that** it additionally comprises a flame retardant selected from the group consisting of aluminium hydroxide, halogen compounds, antimony compounds, bismuth compounds, boron compounds and phosphorus compounds, silicate compounds and mixtures of these.

12. Process for preparing the polymeric material according to at least one of Claims 1 to 11,
**characterized in that** the triglyceride, the polycarboxylic anhydride the polycarboxylic acid and, where appropriate, the other additives, such as fillers and/or catalyst and/or flame retardant, are mixed, and that curing then takes place.

13. Process for preparing the polymeric material according to at least one of Claims 1 to 12,
**characterized in that** the triglyceride, the polycarboxylic anhydride and the polycarboxylic acid and, where appropriate, the catalyst are precrosslinked to a viscosity of from 0.2 to 20,000 mPa.S (CPS) at from 20°C to 200°C, and **in that** the filler and/or the flame retardant are then added, and **in that** curing then takes place.

14. Process according to Claim 12 or 13,
**characterized in that** the curing is carried out at a temperature in the range from > 20°C to 200°C and at a pressure of from 10⁵ Pa (1 bar) to 10⁷ Pa (100 bar) for a period in the range from 10 seconds to 24 hours.

15. Use of the polymeric material according to at least one of Claims 1 to 11,
in prefabricated space-divider systems, as a substitute material for frames made of plastic or of metal, as a material for paint-rails or for covers, as profile material, as sealing material, highly abrasion-resistant coatings or mouldings, as fissure-bridging protective skin, antislip coverings, electrically insulating or electrically conducting compositions, films for tribological uses, underwater marine paints, fluidized-bed sintering systems for devices or mouldings subjected to stresses, shaped elements in the form of impregnated fibres or fibre mats, particle board, substitutes for MDF or for hardboard in the construction or furniture industry, or continuous profiles.

## Revendications

1. Matériau polymère à base de matières premières élongatrices de chaîne, contenant un produit de réaction, qui a été obtenu par réticulation de 10 à 90 % en masse d'un triglycéride ayant au moins 2 groupes époxy et/ou aziridines et 5 à 90 % en masse d'un anhydride d'acide polycarboxylique préparé à partir d'acides polycarboxyliques cycliques ayant au moins 2 groupes acides carboxyliques libres, avec de 0,01 à 4 % en masse d'un acide polycarboxylique à titre d'initiateur.

2. Matériau polymère selon la revendication 1, **caractérisé en ce que** les triglycérides époxydés sont choisis parmi l'huile de soja, l'huile de lin, l'huile de périlla, l'huile de tang, l'huile d'oïticica, l'huile de carthame, l'huile de chanvre, l'huile de graine de coton, l'huile de tournesol, l'huile de colza, les triglycérides issus de végétaux Euphorbia comme l'huile d'Euphorbia Iagascae et les triglycérides hautement oléiques comme par ex. l'huile de tournesol hautement oléique ou l'huile d'Euphorbia Iathyris, l'huile d'arachide, l'huile d'olive, l'huile de noyau d'olives, l'huile d'amande, l'huile de kapok, l'huile de noisette, l'huile de noyau d'abricot, l'huile de faîne, l'huile de lupin, l'huile de maïs, l'huile de sésame, l'huile de pépin de raisin, l'huile de Lallemantia, l'huile de ricin, l'huile d'animaux marins comme l'huile de hareng et l'huile de sardine ou l'huile de menhaden, huile de baleine ainsi que les triglycérides ayant une forte teneur en acide gras saturés, qui sont transformés après coup en état insaturé par ex. par déshydratation, ou des mélanges de ceux-ci.

3. Matériau polymère selon la revendication 1 ou 2, **caractérisé en ce que** les triglycérides époxydés contiennent en plus des triglycérides hydroxylés comme l'huile de ricin.

4. Matériau polymère selon au moins l'une des revendications 1 à 3, **caractérisé en ce que** les anhydrides d'acides polycarboxyliques sont choisi parmi l'anhydride d'acide cyclohexane dicarboxylique, l'anhydride d'acide cyclohexène dicarboxylique, l'anhydride d'acide phtalique, l'anhydride d'acide trimellitique, l'anhydride d'acide hémimellitiqique, l'anhydride d'acide pyromellitique, l'anhydride d'acide 2,3-naphtalène dicarboxylique, l'anhydride d'acide 1,2-cyclopentane dicarboxylique, l'anhydride d'acide 1,2-cyclobutane dicarboxylique, l'anhydride d'acide quinoléinique dicarboxylique, l'anhydride d'acide norbornène dicarboxylique (NADICAN) ainsi que les composés MNA substitués par un groupe méthyle, l'anhydride d'acide pinique, l'anhydride d'acide norpinique, l'anhydride d'acide truxilique, l'anhydride d'acide 1,2-pérylène dicarboxylique, l'anhydride d'acide caronique, l'anhydride d'acide narcamphane dicarboxylique, l'anhydride d'acide isatopique, l'anhydride d'acide camphrique, l'anhydride d'acide 1,8-naphtalène, l'anhydride d'acide diphénique, l'anhydride d'acide o-carboxyphényli acétique, l'anhydride d'acide 1,4,5,8-naphtalène tétracarboxylique ou dés mélanges de ceux-ci.

5. Matériau polymère selon au moins l'une des revendications 1 à 4, **caractérisé en ce que**, à titre d'acide polycarboxylique, on utilise un acide di- ou tricarboxylique.

6. Matériau polymère selon la revendication 5, **caractérisé en ce que** l'acide polycarboxylique est choisi parmi les dérivés d'acide citrique, les huiles de pin polymérisées, les acides azélaiques, les acides galliques, les acides résiniques di- ou polymérisés, les acides anarcade di- ou polymérisé, également Cashew-nut-shell-liquid, les acides polyurone, les acides polyalginiques, les acides mellithe, les acides trimésiniques, les acides di- ou polycarboxyliques aromatiques comme l'acide phtalique, l'acide trimellithe, l'acide hemimellite, l'acide pyromellite ainsi que leurs dérivés substitués aromatiquement comme par exemple l'acide phtalique hydroxy ou alkyle, les acides di- et polycarboxyliques cycliques insaturés comme l'acide norpinique, les acides di- et polycarboxyliques hétérocycliques comme par exemple l'acide loipon ou l'acide cincholoipon, les acides di- et polycarboxyliques bicycliques comme par ex. les acides dicarboxyliques norbornanes, les acides di- et polycarboxyliques à chaîne ouverte, comme par ex. l'acide malonique et leurs homologues à chaînes allongées ainsi que leurs composés substitués comme les acides di- et polycarboxylique hydroxy et keto, les acides pectiques, les acides humiques, le cashex-nut-shell-liquid polymère doté d'au moins deux groupes d'acides carboxyliques en molécule ou des mélanges de ceux-ci.

7. Matériau polymère selon au moins l'une des revendications 1 à 6, **caractérisé en ce qu'**il contient entre 2 et 98 % en masse d'un produit de réaction selon la revendication 1 et 98 à 2 % en masse d'une charge.

8. Matériau polymère selon au moins l'une des revendications 1 à 7, **caractérisé en ce que** la charge est choisie parmi le groupe des charges organiques à base de matière cellulosique comme la fibre de bois, la sciure de bois ou les chutes de bois, les glumes de riz, les fibres de paille et de lin à base de protéines, notamment la laine de mouton ainsi que les charges inorganiques à base de silicates et de carbonates comme le sable, le quartz, le corindon, le carbure de silicium et les fibres de verre, ou des mélanges de ceux-ci.

9. Matériau polymère selon au moins l'une des revendications 1 à 8, **caractérisé en ce que** lors de la fabrication du produit de réaction, on ajoute 0,01 à 10 % en masse d'un catalyseur.

10. Matériau polymère selon la revendication 9, **caractérisé en ce que** le catalyseur est choisi parmi les amines tertiaires, comme la N,N'benzyldimenthylaniline, l'imidazol et ses dérivés, les alcools, les phénols, et leurs composés substitués, les acides hydroxycarboxyliques comme l'acide lactique et l'acide salicylique, les acides thio comme les composés organophosphoriques, notamment le triphénylphosphite, le trisnonylphénylphosphite et Bis-β-chloréthylphosphite, les amines bicycliques comme [2.2.2]diazabicyclooctane, quinuclidine ou diazabicycloundécène, ou des mélanges de ceux-ci.

11. Matériau polymère selon au moins l'une des revendications 1 à 10, **caractérisé en ce qu'**il contient en plus un ignifugeant choisi parmi le groupe de l'hydroxyde, d'aluminium, des composés halogènes, d'antimoine, bismuthiques, boriques et phosphoriques, des composés de silicates ou des mélanges de ceux-ci.

12. Procédé de fabrication d'un matériau polymère selon au moins l'une des revendications 1 à 11, **caractérisé en ce que** le triglycéride, l'anhydride d'acide polycarboxylique, l'acide carboxylique et le cas échéant les autres additifs comme les charges et/ou le catalyseur et/ou les ignifugeants sont mélangés et que la vulcanisation se fait en dernier.

13. Procédé pour la fabrication d'un matériau polymère selon au moins l'une des revendications 1 à 12, **caractérisé en ce que** le triglycéride, l'anhydride d'acide polycarboxylique et l'acide carboxylique et éventuellement le catalyseur sont préréticulés jusqu'à une viscosité de 0, 2 - 20 000 mPas (CPS) à 20°C - 200°C et qu'ensuite la charge et/ou l'ignifugeant sont ajoutés et que la vulcanisation est réalisée ensuite.

14. Procédé de fabrication d'un matériau polymère selon la revendication 12 à 13, **caractérisé en ce que** la vulcanisation est réalisée dans une zone de > 20°C à 200°C à une pression de 10⁵ Pa (1 bar) jusqu'à 10⁷ Pa (100 bars) pendant une durée allant de 10 secondes à 24 heures.

15. Utilisation du matériau polymère selon l'une au moins de revendications 1 à 11, dans des systèmes de modules préfabriqués, comme substitut de matière pour les cadres plastiques et métalliques, comme matière de rails de peinture et d'éléments de revêtements, comme matériau profilé, comme matière épaississante, revêtements résistants fortement à l'usure et corps moulés, pellicule de protection contre les fissures, des couvertures antidérapantes, des masses électro-isolantes ou - conductrices, des films utilisables en tribologie, revêtements des coques des navires, intersystèmes de vertèbre des pièces moulées et des appareils soumis à traction, des éléments moulés comme fibres et nattes en fibres infiltrées, panneau de suspension, des substituts MDF et panneau en fibres dures dans l'industrie du meuble et du bâtiment, des profilés en continu.
